# EUROPEAN PATENT APPLICATION

(11) **EP 3 978 914 A1**
(43) Date of publication of application: **06.04.2022**
(21) Application number: 21199902.4
(22) Date of filing: 29.09.2021
(51) Int. Cl.: G01N 27/447, G01N 27/30

(54) **ELECTRODE, PH MEASURING DEVICE, AND ELECTROPHORESIS DETECTION SYSTEM**

(30) Priority: 30.09.2020 US 202063085368 P; 30.09.2020 US 202063085385 P; 19.01.2021 US 202163138980 P; 29.06.2021 CN 202110725615
(71) Applicant: iCare Diagnostics International Co. Ltd., New Taipei 236 (TW)
(72) Inventor: WANG, YU-MIN, San Jose, 95131 (US); CHAN, SHIH-CHI, San Jose, 95131 (US); GU, CHIEN-YU, 236 New Taipei (TW)
(74) Representative: Zaboliene, Reda

(57) **Abstract**

An electrode (10, 20) which can measure a pH value of a buffer (40) in an electrophoresis process and can realize an electrical connection between the electrophoresis detection device (200) and a power supply is disclosed, The pH value of the buffer (40) can range from 7 to 9, The electrode (10, 20) includes a metal (1, 3). The metal wire (1, 3) is made of a conductive metal selected from a group consisting of titanium (Ti), platinum (Pt), titanium (Ti)/iridium (Ir) oxide, stainless steel, and any combination thereof A pH measuring device (100) including the electrode (10), and an electrophoresis detection system (1000) including the pH measuring device (100) and an electrophoresis detection device (200) are also disclosed. The electrode (10, 20) has simple structure and good flexibility, being bendable according to actual need.

## Description

### FIELD

The subject matter relates to gel electrophoretic processes, and more particularly, to an electrode and applications of the electrode,

### BACKGROUND

During electrophoresis, a pH electrode and an electrophoresis electrode are needed. The pH electrode is used to detect a pH value of a buffer. The electrophoresis electrode is used to electrically connect the electrophoresis detection device to an external power supply. However, the two kinds of electrodes increase the cost of the electrophoresis detection device. Therefore, there is room for improvement in the art.

### SUMMARY

To overcome the above shortcomings, the present disclosure provides an electrode. The electrode includes a metal wire made of a conductive metal selected from a group consisting of titanium (Ti), platinum (Pt), titanium (Ti)/iridium (Ir) oxide, stainless steel, and any combination thereof The electrode is adapted to measure a pH value of a buffer in an electrophoresis detection device ranged from 7 to 9. The electrode is configured to electrically connect the electrophoresis detection device to a power supply.

In some embodiments, the metal wire is made of stainless steel.

In some embodiments, a diameter of the electrode ranges from 0.2 mm to 1.0 mm.

In some embodiments, the diameter of the electrode is selected from a group consisting of 0.25 mm, 0.3 mm, 0.48 mm, 0.5 mm, and 0.8 mm.

In some embodiments, the electrode further includes a surface treatment layer on the metal wire.

In some embodiments, the surface treatment layer is made of a metal selected from a group consisting of zinc (Zn), tin (Sn), nickel (Ni), chromium (Cr), and any combination thereof.

The present disclosure further provides a pH measuring device. The pH measuring device includes a detection host and two electrodes electrically connected to the detection host The two electrodes are adapted to measure a pH value of a buffer in an electrophoresis detection device ranged from 7 to 9. Each of the two electrodes includes a metal wire, the metal wire made of a conductive metal selected from a group consisting of titanium (Ti), platinum (Pt), titanium (Ti)/iridium (Ir) oxide, stainless steel, and any combination thereof.

In some embodiments, the metal wire is made of stainless steel.

In some embodiments, a diameter of each of the electrodes ranges from 0.2 mm to 1.0 mm.

In some embodiments, the diameter of each of the electrodes is selected from a group consisting of 0,25 mm, 0.3 mm, 0.48 mm, 0.5 mm, and 0.8 mm.

In some embodiments, each of the electrodes further includes a surface treatment layer on the metal wire.

In some embodiments, the surface treatment layer is made of a metal selected from a group consisting of zinc (Zn), tin (Sn), nickel (Ni), chromium (Cr), and any combination thereof.

The present disclosure further provides an electrophoresis detection system including an electrophoresis detection device and a pH measuring device. The electrophoresis detection device includes an electrophoresis body, a buffer with a pH value ranging from 7 to 9, a gel medium, and two electrophoresis electrodes disposed on two opposite ends of the gel medium. One end of each of the two electrophoresis electrodes is disposed on the electrophoresis body and extends into the buffer, and the other end of each of the two electrophoresis electrodes is electrically connected to a power supply. Each of the two electrophoresis electrodes includes a metal wire made of a conductive metal selected from a group consisting of titanium (Ti), platinum (Pt), titanium (Ti) / iridium (Ir) oxide, stainless steel, and any combination thereof The pH measuring device includes a detection host and two pH electrodes electrically connected to the detection host. The two pH electrodes configured to measure a pH value of the buffer in the electrophoresis detection device. Each of the two pH electrodes including a metal wire made of a conductive metal selected from a group consisting of Ti, Pt, Ti/Ir oxide, stainless steel, and any combination thereof.

In some embodiments, the metal wire of each of the two pH electrodes is made of stainless steel, and the metal wire of each of the two electrophoresis electrodes is made of stainless steel.

In some embodiments, a diameter of each of the two pH electrodes ranges from 0.2 mm to 1.0 mm, and a diameter of each of the two electrophoresis electrodes ranges from 0.2 mm to 1.0 mm.

An electrode provided by the present disclosure can be used in multiple applications. The electrode can be used as the pH electrode of the electrophoresis detection device and can be used as the electrophoresis electrode of the electrophoresis detection device. The pH electrode and the electrophoresis electrode can be the same electrode, which reduces the cost of the electrophoresis detection device. In addition, the electrode which is used for the pH electrode and the electrophoresis electrode is made of metal wire, which has simple structure and good flexibility, and can be bent according to actual need.

### BRIEF DESCRIPTION OF THE DRAWINGS

Implementations of the present technology will now be described, by way of example only, with reference to the attached figures.
FIG. 1 is a sectional view of an embodiment of a pH electrode according to the present disclosure.
FIG. 2 is diagrammatic view of an embodiment of a pH measuring device according to the present disclosure.
FIG. 3 is a diagrammatic view of an embodiment of an electrophoresis electrode according to the present disclosure.
FIG. 4 is a diagrammatic view of an embodiment of an electrophoresis detection device according to the present disclosure.
FIG. 5 is a diagrammatic view of an embodiment of an electrophoresis detection system according to the present disclosure.
FIG. 6 is an exploded diagrammatic view of an embodiment of a nucleic acid detection kit according to the present disclosure.
FIG. 7 is a diagrammatic view of an embodiment of a nucleic acid detection kit without a kit body according to the present disclosure.

### DETAILED DESCRIPTION

It will be appreciated that for simplicity and clarity of illustration, where appropriate, reference numerals have been repeated among the different figures to indicate corresponding or analogous components. In addition, numerous specific details are set forth in order to provide a thorough understanding of the embodiments described herein. However, it will be understood by those of ordinary skill in the art that the embodiments described herein can be practiced without these specific details. In other instances, methods, procedures, and components have not been described in detail so as not to obscure the related relevant feature being described. Also, the description is not to be considered as limiting the scope of the embodiments described herein. The drawings are not necessarily to scale, and the proportions of certain parts may be exaggerated to better illustrate details and features of the present disclosure.

The term "comprising," when utilized, means "including, but not necessarily limited to"; it specifically indicates open-ended inclusion or membership in the so-described combination, group, series, and the like.

During an electrophoresis process, a pH value of a buffer in which a gel medium is immersed needs to be detected by a pH electrode. Different pH values mean that mobility of charged ions in the buffer is also different. At the same time, an electrophoresis electrode is also used to electrically connect the electrophoresis detection device to a power supply. The existing pH electrode may be a glass platinum electrode, which includes a glass base layer and a metal layer on the base layer. The metal layer is coated on a surface of the base layer by physical vapor deposition (PVD). The metal layer may be made of titanium (Ti), platinum (Pt), and a combination thereof. However, the glass platinum electrode is fragile and does not have flexibility. Once the glass platinum electrode is manufactured, a specification and a shape of the glass platinum electrode are fixed, which does not meet all different needs. That is, the glass platinum electrode has a poor adaptability. Moreover, the PVD technology needs vacuum pumping, and the metal layer is made of precious metals, which increases the cost of the glass platinum electrode. The electrophoresis electrode is also formed by PVD technology, which includes a substrate (such as a metal substrate or a non-conductive substrate) and a Ti/Pt composite metal coating deposited on the substrate. However, the cost of the electrophoresis electrode is also high.

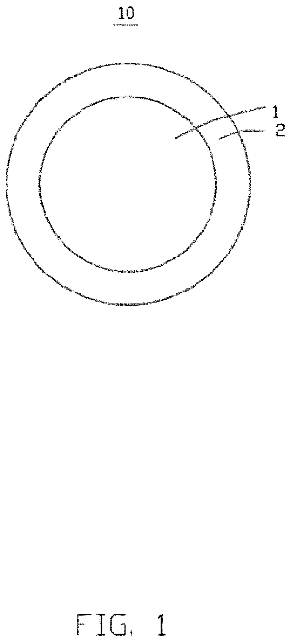

FIG. 1 illustrates a pH electrode 10, which is used to measure a pH value of a buffer. The pH electrode 10 can be applied in an electrophoresis detection device. The electrophoresis detection device may include the buffer and the gel medium immersed in the buffer. The pH value of the buffer usually ranges from 7 to 9. The pH electrode 10 includes a metal wire 1. The metal wire 1 may be made of a conductive metal selected from a group consisting of titanium (Ti), platinum (Pt), titanium (Ti) / iridium (Ir) oxide, stainless steel, and any combination thereof Since the pH electrode 10 is a conductive metal wire, the pH electrode 10 has a good flexibility and reliability in measurement, being bendable as needed. The conductive metal used in the pH electrode 10 has a low cost, so that the pH electrode 10 is simple to manufacture. The pH electrode 10 can be applied in a miniature electrophoresis detection device. The accuracy of the pH electrode 10 is at least equivalent to that of the existing glass platinum electrode.

In an embodiment, the metal wire 1 may be made of stainless steel. The stainless steel has a low cost, which reduces the cost of the pH electrode 10.

In an embodiment, the stainless steel may be, but is not limited to, SUS 304, SUS 312, and SUS 316.

In an embodiment, the stainless steel may be SUS 304.

In an embodiment, a diameter of the pH electrode 10 may be, but is not limited to, 0.25 mm, 0.3 mm, 0.48 mm, 0.5 mm, and 0.8 mm. The diameter of the pH electrode 10 cannot be too large, which increases a resistance of the pH electrode 10 and affects the accuracy of the pH value measurement. In an embodiment, the diameter of the pH electrode 10 may be 0.3 mm.

Referring to FIG. 1, the pH electrode 10 further includes a surface treatment layer 2. The surface treatment layer 2 is coated on the metal wire 1 by a metal surface treatment process. The surface treatment layer 2 can improve a corrosion resistance of the metal wire 1, ensuring the electrical performance of the metal wire 1 and improving the accuracy of pH value measurement.

In an embodiment, the surface treatment layer 2 may be made of a metal selected from a group consisting of zinc (Zn), tin (Sn), nickel (Ni), chromium (Cr), and any combination thereof.

### EXAMPLE 1

The pH electrode 10 is made of Ti wire. The diameter of the pH electrode 10 is about 0.25 mm.

### EXAMPLE 2

The pH electrode 10 is made of stainless steel. The stainless steel is SUS 304. The diameter of the pH electrode 10 is about 0.3 mm.

### COMPARATIVE EXAMPLE

The pH electrode is the commercial glass platinum electrode.

The electrodes of EXAMPLES 1-2 and the COMPARATIVE EXAMPLE are used to measure the pH value of a buffer and a standard liquid. The measurement can be carried out by placing a buffer or a standard liquid in an electrophoresis groove of the electrophoresis detection device. Then, each electrode is immersed in the buffer and the standard liquid to measure the pH values of the buffer and the standard liquid.

In an embodiment, a composition of the buffer includes a tris (Tris(hydroxymethyl)aminomethane, 242 g / L), an acetic acid (58.1 g / L), and an EDTA (18.6 g/L).

The pH values measured by the three different electrodes are shown in Table 1.

**Table 1**

| | Theoretical value | Com. Example | Example 1 | Example 2 |
|---|---|---|---|---|
| Buffer (25 °C) | 8.2 | 8.2-8.3 | 8.3-8.4 | 8.2-8.3 |
| Standard liquid (H₂O, 25 °C) | 7.0-7.5 | 7.2-7.3 | 7.4-7.5 | 7.1-7.2 |

From Table 1, the pH values measured by the pH electrodes 10 in EXAMPLE 1 and in EXAMPLE 2 are similar to the pH value measured by the glass platinum electrode in COMPARATIVE EXAMPLE. In particular, the pH value measured by the pH electrode 10 of EXAMPLE 2 is closer to the pH value measured by the glass platinum electrode. Thus, the accuracy of the pH electrode 10 is similar to that of the glass platinum electrode.

The pH electrode 10, especially the pH electrode 10 made of stainless steel, may be used in a weakly alkaline test liquid, temperature of the environment not exceeding 80 °C. Under the above conditions, the pH electrode 10 made of stainless steel will not be oxidized, and the accuracy of the pH electrode 10 is similar to that of the existing glass platinum electrode. Therefore, the pH electrode 10 is applicable for the miniature electrophoresis detection device, which is used in a portable nucleic acid detection device. The pH value of the buffer in the miniature electrophoresis detection device is between 7 and 9, which is weakly alkaline, and the temperature of the measuring environmental condition is below 80 °C. Therefore, it is possible to replace the existing glass platinum electrode with the pH electrode 10 made of the stainless steel, which reduces the cost of the pH electrode 10.

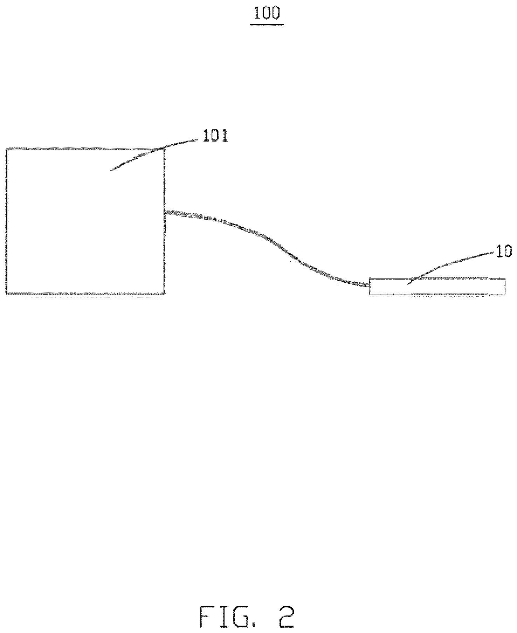

FIG. 2 illustrates a pH measuring device 100 according to the present disclosure. The pH measuring device 100 includes a detection host 101 and two pH electrodes 10. The two pH electrodes 10 are electrically connected to the detection host 101.

During the detection of the pH value, one of the two pH electrodes 10 is immersed into the buffer to detect the pH value of the buffer, and another one of the two pH electrodes 10 is immersed into the standard liquid to detect the pH value of the standard liquid. The pH value of the buffer is obtained by calculating a potential difference between the buffer and the standard liquid.

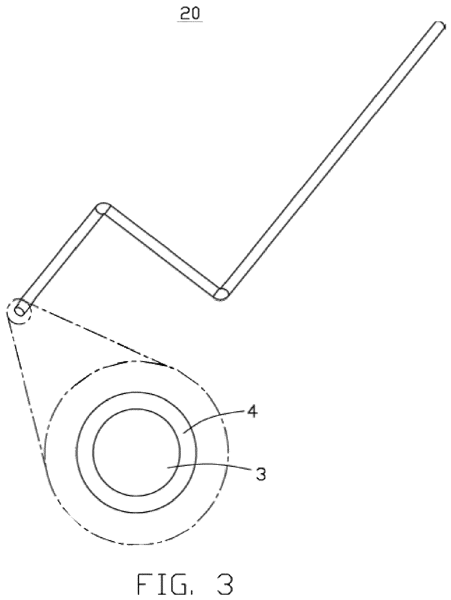

FIG. 3 illustrates an electrophoresis electrode 20, electrically connecting the electrophoresis detection device to an external power supply. The electrophoresis electrode 20 includes a metal wire 3.

In an embodiment, a surface treatment layer 4 is coated on a surface of the metal wire 3. The material of the metal wire 3 is the same as that of the metal wire 1 of the pH electrode 10, and the material of the surface treatment layer 4 is same as that of the surface treatment layer 2 of the pH electrode 10.

The electrophoresis electrode 20 has flexibility and may be in diverse sizes. Thus, the electrophoresis electrode 20 can be used in different electrophoresis detection devices with different specifications. The electrophoresis electrode 20 has a low cost, and the preparation process is simple, which is especially suitable for the miniature electrophoresis detection device.

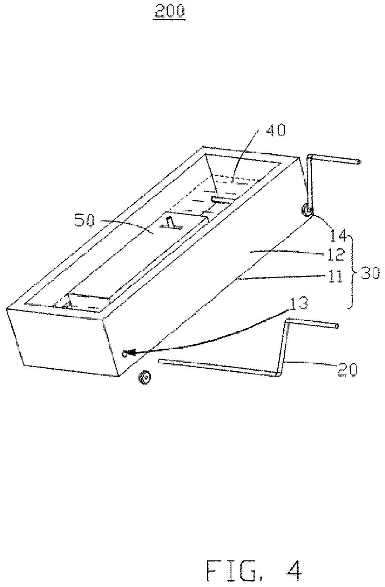

FIG. 4 illustrates an electrophoresis detection device 200 according to the present disclosure. The electrophoresis detection device 200 includes an electrophoresis body 30, a buffer 40, a gel medium 50, and two electrophoresis electrodes 20 disposed on the ends of the electrophoresis body 30. The electrophoresis body 30 defines an electrophoresis groove 15. The buffer 40 is disposed in the electrophoresis groove 15, and the gel medium 50 is immersed in the buffer 40. The two electrophoresis electrodes 20 are located at opposite ends of the gel medium 50. One end of each electrophoresis electrode 20 is disposed on the electrophoresis body 30 and extends into the buffer 40, and the other end of each electrophoresis electrode 20 is electrically connected to the power supply. The electrophoresis detection device 200 is electrically connected to the power supply through the two electrophoresis electrodes 20.

In an embodiment, the electrophoresis body 30 includes a base board 11, a plurality of sidewalls 12 connected to the base board 11, and a cover plate (not shown) disposed on ends of the sidewalls 12 away from the base board 11. The base board 11, the sidewalls 12, and the cover plate cooperatively form the electrophoresis groove 15.

In an embodiment, one of the sidewalls 12 defines two through holes 13. The through holes 13 are disposed on the ends of the one of the sidewalls 12. The two electrophoresis electrodes 20 extend into the buffer 40 through the two through holes 13.

In an embodiment, a fixing member 14 is disposed on an outside surface of each through hole 13. The fixing members 14 are fixed on the sidewall 12 to correspond to the through holes 13. Each of the electrophoresis electrodes 20 passes through one of the through holes 13, and is fixed through the fixing member 14 corresponding to the through hole 13. Thus, the electrophoresis electrodes 20 do not shake or move on the electrophoresis body 30, thereby achieving a stable electrical connection between the electrophoresis detection device 200 and the power supply.

The electrophoresis electrode 20 can be applied in the existing electrophoresis detection device. The electrophoresis electrode 20 can be installed in place of the existing electrode. Thereby, the electrophoresis electrode 20 can reduce the cost of the existing electrophoresis detection device. Moreover, the electrophoresis electrode 20 has a simple structure, which is convenient to install, be bent freely, and adaptable to a variety of applications.

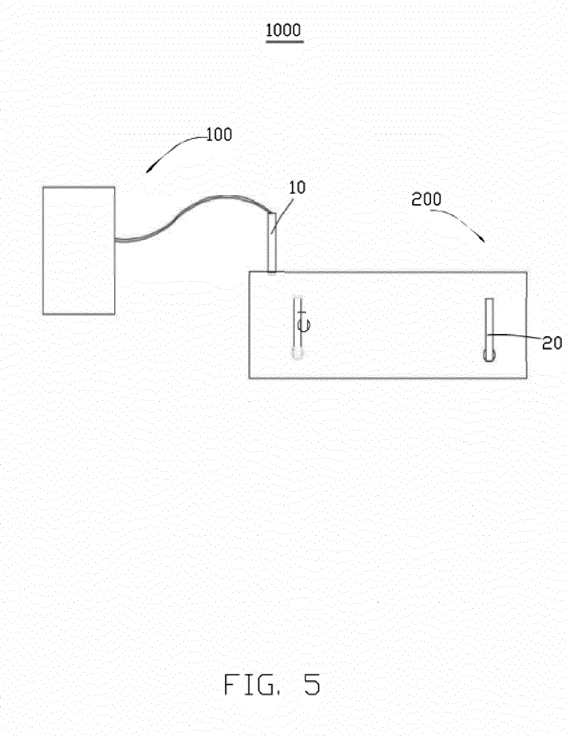

FIG. 5 illustrates an electrophoresis detection system 1000 according to the present disclosure. The electrophoresis system 1000 includes the pH measuring device 100 and the electrophoresis detection device 200. Because the material of the metal wire 1 and the surface treatment layer 2 in the pH electrode 10 are the same as those of the metal wire 3 and the surface treatment layer 4 in the electrophoresis electrode 20, the pH electrode 10 can be used as the electrophoresis electrode 20. After measuring the pH value of the buffer 40, the pH electrodes 10 can be assembled in the electrophoresis detection device 200 to electrically connect the electrophoresis detection device 200 to the external power supply. This leads to further reduction of the cost of the electrophoresis detection device 200.

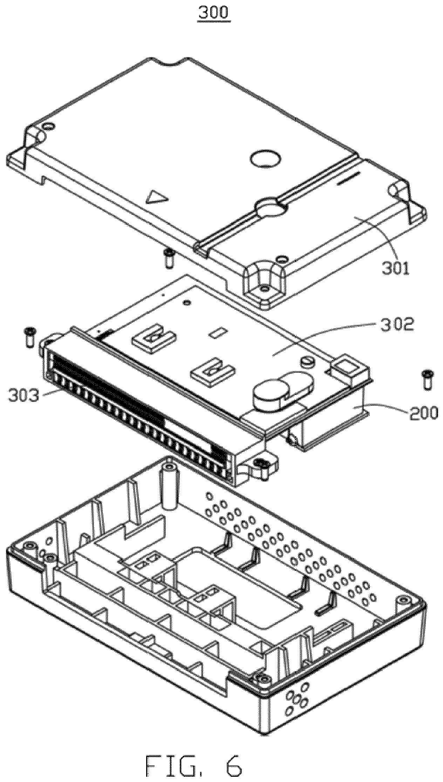

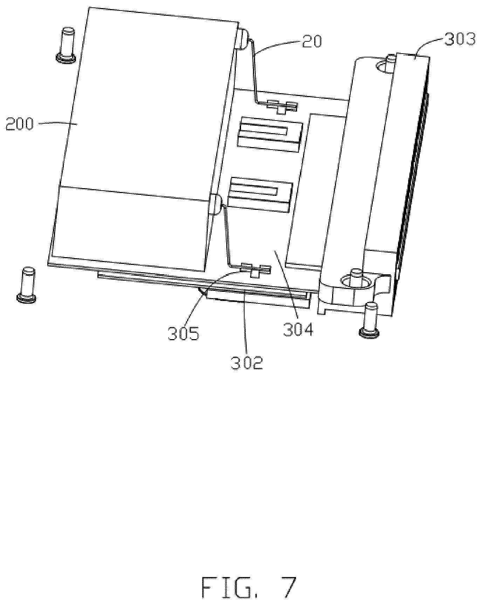

FIGS. 6 and 7 illustrate a nucleic acid detection kit 300 according to the present disclosure. The nucleic acid detection kit 300 includes a kit body 301, a detection chip 302, the electrophoresis detection device 200, and a connector 303.

The detection chip 302 and the electrophoresis detection device 200 are connected and are disposed in the kit body 301. The detection chip 302 and the electrophoresis detection device 200 are electrically connected to the connector 303. The detection chip 302 is used to perform a PCR amplification reaction. The electrophoresis box 3 is used to perform an electrophoresis process. A sample for testing undergoes the PCR amplification in the detection chip 302 to obtain a mixer. The mixer enters the electrophoresis detection device 200 for the electrophoresis process. An image collection unit (not shown) acquires a fluorescent image of the electrophoresis detection device 200. The nucleic acid detection kit 300 integrates with the detection chip 302 and the electrophoresis detection device 200, which has a small size, and is suitable for a portable use. After the PCR amplification, the electrophoresis detection can be carried out automatically. The two processes are performed in a single equipment, and the sampling accuracy is controlled accurately. Thus, the detection process is efficient and flexible.

In an embodiment, the nucleic acid detection kit 300 further includes a heating circuit board 304 disposed on a first surface of the detection chip 302. The heating circuit board 304 is electrically connected to the connector 303. The heating circuit board 304 is configured to heat the detection chip 302. One end of each electrophoresis electrode 20 of the electrophoresis detection device 200 away from the electrophoresis body 30 is electrically connected to the heating circuit board 304 to electrically connect the electrophoresis detection device 200 and the connector 303. By directly connecting the electrophoresis electrodes 20 to the heating circuit board 304, the nucleic acid detection kit 300 has a simple structure and is easy to assemble.

In an embodiment, two buckles 305 are disposed on the heating circuit board 304. The buckles 305 clamp the electrophoresis electrodes 20, achieving a stable electrical connection between the electrophoresis detection device 200 and the heating circuit board 304.

With the above configuration, an electrode provided by the present disclosure can be used in multiple applications. The electrode can be used as the pH electrode 10 of the electrophoresis detection device and can be used as the electrophoresis electrode 20 of the electrophoresis detection device. The pH electrode 10 and the electrophoresis electrode 20 can be the same electrode, which reduces the cost of the electrophoresis detection device. In addition, the electrode which is used for the pH electrode 10 and the electrophoresis electrode 20 is made of metal wire, which has simple structure and good flexibility, and can be bent according to actual need.

The embodiments shown and described above are only examples. Even though numerous characteristics and advantages of the present technology have been set forth in the foregoing description, together with details of the structure and function of the present disclosure, the disclosure is illustrative only, and changes may be made in the detail, including in matters of shape, size and arrangement of the parts within the principles of the present disclosure, up to and including, the full extent established by the broad general meaning of the terms used in the claims.

## Claims

1. An electrode (10, 20) comprising a metal wire (1, 3), **characterized in that**:
the metal wire (1, 3) made of a conductive metal selected from a group consisting of titanium (Ti), platinum (Pt), titanium (Ti)/iridium (Ir) oxide, stainless steel, and any combination thereof, the electrode (10, 20) adapted to measure a pH value of a buffer (40) in an electrophoresis detection device (200) ranged from 7 to 9, the electrode (10, 20) configured to electrically connect the electrophoresis detection device (200) to a power supply.

2. The electrode (10, 20) of claim 1, **characterized in that**, the metal wire (1, 3) is made of stainless steel.

3. The electrode (10, 20) of claim 1, **characterized in that**, a diameter of the electrode (10, 20) ranges from 0.2 mm to 1.0 mm.

4. The electrode (10, 20) of claim 3, **characterized in that**, the diameter of the electrode (10, 20) is selected from a group consisting of 0.25 mm, 0.3 mm, 0.48 mm, 0.5 mm, and 0.8 mm.

5. The electrode (10, 20) of claim 1, **characterized in that**, the electrode (10, 20) further comprises a surface treatment layer (2, 4) on the metal wire (1, 3).

6. The electrode (10, 20) of claim 5, **characterized in that**, the surface treatment layer (2, 4) is made of a metal selected from a group consisting of zinc (Zn), tin (Sn), nickel (Ni), chromium (Cr), and any combination thereof.

7. A pH measuring device (100) comprising a detection host (101), **characterized in that**, the pH measuring device (100) further comprising:
two electrodes (10) electrically connected to the detection host (101), the two electrodes (10) adapted to measure a pH value of a buffer in the electrophoresis detection device (200) ranged from 7 to 9, each of the two electrodes (10) comprising a metal wire (1), the metal wire (1) made of a conductive metal selected from a group consisting of titanium (Ti), platinum (Pt), titanium (Ti)/iridium (Ir) oxide, stainless steel, and any combination thereof.

8. The pH measuring device (100) of claim 7, **characterized in that**, the metal wire (I) is made of stainless steel,

9. The pH measuring device (100) of claim 7, **characterized in that**, a diameter of each of the electrodes (10) ranges from 0.2 mm to 1.0 mm.

10. The pH measuring device (100) of claim 9, **characterized in that**, the diameter of each of the electrodes (10) is selected from a group consisting of 0.25 mm, 0,3 mm, 0.48 mm, 0.5 mm, and 0.8 mm.

11. The pH measuring device (100) of claim 7, **characterized in that**, each of the electrodes (10) further comprises a surface treatment layer (2) on the metal wire (1).

12. The pH measuring device (100) of claim 11, **characterized in that**, the surface treatment layer (2) is made of a metal selected from a group consisting of zinc (Zn), tin (Sn), nickel (Ni), chromium (Cr), and any combination thereof.

13. An electrophoresis detection system (1000), **characterized in that**, comprising:
an electrophoresis detection device (200) comprising:
an electrophoresis body (30),
a buffer (40) with a pH value ranging from 7 to 9,
a gel medium (50); and
two electrophoresis electrodes (20) disposed on two opposite ends of the gel medium (50), one end of each of the two electrophoresis electrodes (20) disposed on the electrophoresis body (30) and extending into the buffer (40), and the other end of each of the two electrophoresis electrodes (20) electrically connected to a power supply, each of the two electrophoresis electrodes (20) comprising a metal wire (3) made of a conductive metal selected from a group consisting of titanium (Ti), platinum (Pt), titanium (Ti) / iridium (Ir) oxide, stainless steel, and any combination thereof;
a pH measuring device (100) comprising:
a detection host (101); and
two pH electrodes (10) electrically connected to the detection host (101), the two pH electrodes (10) configured to measure the pH value of the buffer (40), each of the two pH electrodes (10) comprising a metal wire (1) made of a conductive metal selected from a group consisting of Ti, Pt, Ti/Ir oxide, stainless steel, and any combination thereof.

14. The electrophoresis detection system (1000) of claim 13, **characterized in that**, the metal wire (1) of each of the two pH electrodes (10) is made of stainless steel, and the metal wire (3) of each of the two electrophoresis electrodes (20) is made of stainless steel.

15. The electrophoresis detection system (1000) of claim 13, **characterized in that**, a diameter of each of the two pH electrodes (10) ranges from 0.2 mm to 1.0 mm, and a diameter of each of the two electrophoresis electrodes (20) ranges from 0.2 mm to 1.0 mm.
